# EUROPÄISCHE PATENTSCHRIFT

(11) **EP 1 940 956 B1**
(45) Veröffentlichungstag und Bekanntmachung des Hinweises auf die Patenterteilung: **01.07.2015**
(21) Anmeldenummer: 06792414.2
(22) Anmeldetag: 11.10.2006
(51) Int. Cl.: C08L 69/00, G02B 5/02, G02F 1/00

(54) **LICHTSTREUENDE FOLIEN SOWIE DEREN VERWENDUNG IN FLACHBILDSCHIRMEN**
LIGHT-DIFFUSING FILMS AND THEIR USE IN FLAT SCREENS
FILMS DIFFUSEURS DE LUMIERE ET LEUR UTILISATION DANS DES ECRANS PLATS

(30) Priorität: 19.10.2005 DE 102005050072
(43) Veröffentlichungstag der Anmeldung: 09.07.2008
(60) Teilanmeldung: 14164367.6
(73) Patentinhaber: Bayer Intellectual Property GmbH, 40789 Monheim (DE)
(72) Erfinder: PUDLEINER, Heinz, 47800 Krefeld (DE); MEYER, Klaus, 41539 Dormagen (DE); NICKEL, Jörg, 41539 Dormagen (DE)
(74) Vertreter: BIP Patents
(86) Internationale Anmeldenummer: PCT/EP2006/009784
(87) Internationale Veröffentlichungsnummer: WO 2007/045380

(56) Entgegenhaltungen:
- WO-A1-2005/022245
- US-A1- 2004 066 645

## Beschreibung

Die vorliegende Erfindung betrifft Folien aus transparentem Polycarbonat, die eine hohe Rauigkeit und einen niedrigen Glanzgrad aufweisen, mit transparenten polymeren Teilchen mit einer vom Matrixmaterial unterschiedlichen optischen Dichte, sowie deren Verwendung, insbesondere als Diffuser-Filme in Flachbildschirmen.

Aus dem Stand der Technik sind Lichtstreuende transluzente Erzeugnisse aus transparenten Kunststoffen mit verschiedenen Lichtstreuenden Zusatzstoffen und daraus hergestellte Formteile bereits bekannt.

In US 2004/0066645 A1 werden allgemein Lichtstreuende Materialien beschrieben, die 0,2 bis 5 % Lichtstreuende Teilchen enthalten, und die eine Lichttransmission von größer 70 % und einem Haze von wenigstens 10 % aufweisen.

Das Streu-Additiv hat einen mittleren Durchmesser von 3 bis 10 µm.

In JP 07-090167 wird ein Lichtstreuender Kunststoff beschrieben, der aus 1 bis 10% Teilchen, die einen Brechungsindex von weniger als 1,5 und eine Teilchengröße von 1 bis 50 µm haben, und 90 bis 99 % eines aromatischen Polycarbonats besteht, wobei sich die Teilchen im Wesentlichen nicht in dem aromatischen Polycarbonat lösen. Als Streu-Additive werden Acrylat-, Polystyrol-, Glas-, Titandioxid oder Calciumcarbonat-Partikel eingesetzt. Als Anwendung werden LCD erwähnt.

In EP 0 269 324 B1 wird eine Streu-Additiv-Zusammensetzung sowie Lichtstreuende thermoplastische Polymerzusammensetzungen mit 0,1 bis 10 % Streuadditiv beschrieben.

In EP 0634 445 B1 wird Paraloid EXL 5137 als Streu-Additiv in Kombination mit anorganischen Teilchen in Polycarbonat eingesetzt, wobei 0,001 bis 0,3% dieser Teilchen (z.B. Titandioxid) zu einer verbesserten Alterungsbeständigkeit und damit Farbstabilität beitragen. Dieses ist besonders vorteilhaft, wenn Compounds mit hohen Streumittel-Gehalten (> 2 %) über längere Zeit (> 500 Stunden) erhöhten Gebrauchstemperaturen (z.B. 140°C) ausgesetzt sind.

In WO 2004/090587 werden Diffuser-Platten mit einer Dicke von 2 mm für den Einsatz in LCD beschrieben, die 0,2 bis 10 % Streu-Additiv enthalten und die mindestens auf einer Seite einen Glanz von 20 bis 70 % (gemessen nach JIS K 7105) aufweisen. Weiterhin werden coextrudierte Platten beschrieben, in denen die Coextrusionsschicht 20 bis 200 µm dick ist. Basis- und Coextrusionsschicht enthalten Streu-Additive. Als Streu-Additive, die einen Teilchendurchmesser von 5 bis 30 µm aufweisen, werden vernetzte Silicone, Acrylate oder Talkum eincompoundiert.

Die aus dem Stand der Technik bekannten Diffuser-Filme weisen nur eine unbefriedigende Helligkeit (Brightness) auf, insbesondere im Zusammenspiel mit dem üblicherweise in einer sogenannten Backlight-Unit verwendeten Foliensatz. Um die Eignung der Lichtstreuenden Platten für sogenannte Backlight-Units für LCD-Flachbildschirme zu beurteilen, muss die Helligkeit (Brightness) des Gesamtsystems betrachtet werden.

Grundsätzlich weist eine Backlight-Unit (Direct Light System) den nachfolgend beschriebenen Aufbau auf. Sie besteht in der Regel aus einem Gehäuse, in dem je nach Größe der Backlight-Unit eine unterschiedliche Anzahl an Leuchtstoffröhren, sogenannten CCFL (Cold Cathode Fluorescent Lamp) angeordnet sind. Die Gehäuseinnenseite ist mit einer Licht reflektierenden Oberfläche ausgestattet. Auf diesem Beleuchtungssystem liegt die Diffuserplatte auf, die eine Dicke von 1 bis 3 mm aufweist, bevorzugt eine Dicke von 2 mm. Auf der Diffuserplatte befindet sich ein Satz von Folien, die folgende Funktionen haben können: Lichtstreuung (Diffuserfolien), Circularpalarisatoren, Fokussierung des Lichtes in Vorwärtsrichtung durch sogenannte BEF (Brighness Enhancing Film) und Linearpolarisatoren. Die linear polarisierende Folie liegt dabei direkt unter dem darüber befindlichen LCD-Display.

Lichtstreuende Kunststoffzusammensetzungen in optischen Anwendungen enthalten herkömmlich anorganische oder organische Partikel mit einem Durchmesser von 1 bis 50 Mikrometer, in einigen Fällen sogar bis 120 µm, d.h. sie enthalten Streuzentren, die sowohl für die diffusiven als auch für die fokussierenden Eigenschaften verantwortlich sind.

Als transparente Streupigmente können grundsätzlich alle Acrylate, insbesondere Kern-Schale Acrylate eingesetzt werden, die über eine ausreichend hohe thermische Stabilität bis mindestens 300°C verfügen, um bei den Verarbeitungstemperaturen des transparenten Kunststoff, bevorzugt Polycarbonat, nicht zersetzt zu werden. Darüber hinaus dürfen die Pigmente über keine Funktionalitäten verfügen, die zu einem Abbau der Polymerkette des Polycarbonat führen. So können z.B. Paraloid® der Fa. Röhm & Haas oder Techpolymer® der Fa. Sekisui sehr gut zur Pigmentierung von tranparenten Kunststoffen eingesetzt werden. Aus diesen Produktlinien stehen eine Vielzahl verschiedener Typen zur Verfügung. Bevorzugt werden Kernschale-Acrylate aus der Paraloid-Reihe eingesetzt.

Aufgabe der vorliegenden Erfindung war es, Folien zur Verfügung zu stellen, die verbesserte Eigenschaften gegenüber denen aus dem Stand der Technik aufweisen, insbesondere verbesserte Helligkeit bei gleichzeitig hoher Lichtstreuung, so dass sie besonders gut für Backlight Units eingesetzt werden können.

Diese Aufgabe konnte überraschenderweise durch die erfindungsgemäßen Folien aus transparentem Polycarbonat, die einen Glanzgrad gemessen gemäß EN ISO 2813 bei einem Winkel von 60° von < 20 %, bevorzugt < 10 % und von > 0,5 % und eine Rauigkeit gemessen gemäß ISO 4288 von > 3 µm, bevorzugt > 4 µm und < 25 µm, bevorzugt < 20 µm auf der strukturierten Seite und einen Glanzgrad gemessen gemäß EN ISO 2813 bei einem Winkel von 60° von > 50 % auf der glänzenden Seite aufweisen, und die 0,01 bis 20 Gew.-% polymerer Teilchen auf Acrylat-Basis mit einer Kern-Schale-Morphologie und einem vom Matrixmaterial unterschiedlichen Brechungsindex und mit einem Zahlenmittel der mittleren Teilchengröße zwischen 1 und 100 µm enthalten, gelöst werden. Aufgrund der Helligkeitseigenschaften und der gleichzeitig hohen Lichtstreuung sind sie für Back Light Units besonders gut geeignet. Dieser Effekt zeigt sich noch verstärkt in Zusammenhang mit einem in einer Backlight-Unit (BLU) typischerweise verwendeten Foliensatz, der auf der erfindungsgemäßen Folie zusätzlich aufgelegt wird.

Der Glanzgrad der Folienoberfläche ist besonders wichtig und beeinflusst die optischen Eigenschaften der Folie.

Gegenstand der vorliegenden Erfindung sind daher transparente Polycarbonatfolien, die aus mindestens einer Schicht bestehen, wobei mindestens eine Schicht 0,01 bis 20 Gew.-% transparente polymere Teilchen auf Acrylat-Basis mit einer Kern-Schale-Morphologie mit einem vom Matrixmaterial unterschiedlichen Brechungsindex und mit einem Zahlenmittel der mittleren Teilchengröße zwischen 1 und 100 µm enthält und die einen Glanzgrad gemessen gemäß EN ISO 2813 bei einem Winkel von 60° von < 20 % und > 0,5 % und eine Rauigkeit gemessen gemäß ISO 4288 von > 3 µm und < 25 µm auf der strukturierten Seite und einen Glanzgrad gemessen gemäß EN ISO 2813 bei einem Winkel von 60° von > 50 % auf der glänzenden Seite ausweist.

Die Schicht enthält 80 bis 99,99 Gew.-% eines transparenten Polycarbonats und 0,01 bis 20 Gew.-% polymerer Teilchen, mit einer mittleren Teilchengröße im Wesentlichen zwischen 1 und 100 µm, bevorzugt 1 bis 50 µm Die Folie weist eine strukturierte und eine glänzende Seite auf, wobei die Oberfläche der strukturierten Seite einen Glanzgrad gemessen gemäß EN ISO 2813 bei einem Winkel von 60° von < 20 % und > 0,5 % und eine Rauigkeit gemessen gemäß ISO 4288 von > 3 µm und < 25 µm, bevorzugt < 20 µm, und die Oberfläche der glänzenden Seite einen Glanzgrad gemessen gemäß EN ISO 2813 bei einem Winkel von 60° von > 50 % aufweist.

Für die Herstellung der strukturierten Folien-Oberflächen werden beheizte Gummi-Walzen eingesetzt, wie in der DE 32 28 002 (oder dem US-Äquivalent 4 368 240) der Fa. Nauta Roll Corporation offenbart sind.

Die erfindungsgemäßen Folien werden bevorzugt durch thermoplastische Verarbeitung hergestellt.

Die Strukturierung der Folienoberflächen erfolgt - wie für den Fachmann bekannt - mit Hilfe von Walzen, bevorzugt 3 Walzen eines Glättwerkes. Besonders entscheidend für die Ausprägung der Folienoberfläche wie allgemein bekannt sind die Strukturen der beiden Walzen, die den Walzenspalt bilden, in den die Schmelze (sogenannter Schmelzevorhang) nach Verlassen der Extruder-Düse eintritt. Wie dem Fachmann bekannt ist, werden für die Herstellung matter oder strukturierter Folienoberflächen bevorzugt Silicon-Gummi beschichtete Walzen eingesetzt, wie sie z.B. in US 4 368 240 der Fa. Nauta Roll Corporation offenbart sind. Wesentliche verfahrenstechnische Parameter für die Abformung der Strukturen sind die Temperatur der Gummi-Walze und der Druck im Walzenspalt, der auf den Schmelzevorhang zwischen den Walzen ausgeübt wird. Die Verfahrensparameter können durch einfache Versuche schnell ermittelt werden.

Bei dem in den Beispielen eingesetzten Glättwerk wird der Druck im Walzenspalt beispielsweise über den relativen Abstand der Walzen zueinander eingestellt: Ein breiter Walzenspalt, z.B. 0,925 bedeutet, dass ein geringer Abformdruck auf die Schmelze im Walzenspalt ausgeübt wird, die Struktur nur sehr oberflächlich auf die Folienoberfläche abgeformt wird und somit eine Folie mit hohem Glanzgrad hergestellt wird.

Eine Erhöhung der Temperatur der Silicon-Gummi-Walze führt zu einer Erhöhung der Plastifizierung der Schmelze im Walzenspalt, so dass die Schmelze tiefer in die Oberflächenstruktur der Gummi-Walze eindringen und diese abformen kann.

Durch die Kombination von erhöhter Temperatur, z.B. 130°C und einem engen relativen Walzenspalt, z.B. 0,6 lassen sich beispielsweise Folien aus Polycarbonat herstellen, die eine ausgeprägte Struktur aufweisen.

Allgemein bekannt ist auch, dass glatte Oberflächen vorzugsweise mit polierten Metallwalzen hergestellt werden.

Ein weiterer Gegenstand dieser Erfindung ist die Verwendung der erfindungsgemäßen Folien als Diffuser-Folien für Flachbildschirme, insbesondere bei der Hinterleuchtung von LCD-Displays.

Die erfindungsgemäßen Folien weisen eine hohe Lichttransmission bei gleichzeitig hoher Lichtstreuung auf und können beispielsweise in den Beleuchtungssystemen von Flachbildschirmen (LCD-Bildschirmen) zum Einsatz kommen. Hier ist eine hohe Lichtstreuung bei gleichzeitiger hoher Lichttransmission und Fokussierung des Lichtes in Richtung auf den Betrachter von entscheidender Bedeutung. Das Beleuchtungssystem solcher Flachbildschirme kann entweder mit seitlicher Lichteinkopplung erfolgen (Edge light System) oder bei größeren Bildschirmgrößen, bei denen die seitliche Lichteinkopplung nicht mehr ausreichend ist, über eine Backlight-Unit (BLU), bei der die direkte Beleuchtung hinter der Diffuserplatte durch diese möglichst gleichmäßig verteilt werden muss (Direct Light System).

Die erfindungsgemäßen Folien haben vorzugsweise eine Dicke von 30 µm bis 1000 µm Bei den Folien kann es sich auch um Mehrschichtverbunde aus mindestens zwei Folien handeln, die durch Extrusion hergestellt werden können.

Zur Herstellung von Folien durch Extrusion wird das Kunststoffgranulat, beispielsweise das Polycarbonatgranulat einem Fülltrichter eines Extruders zugeführt und gelangt über diesen in das Plastifiziersystem bestehend aus Schnecke und Zylinder. Im Plastifiziersystem erfolgt das Fördern und Aufschmelzen des Kunststoffmaterials. Die Kunststoffschmelze wird durch eine Breitschlitzdüse gedrückt. Zwischen Plastifiziersystem und Breitschlitzdüse können eine Filtereinrichtung, eine Schmelzpumpe, stationäre Mischelemente und weitere Bauteile angeordnet sein. Die die Düse verlassende Schmelze gelangt auf einen Glättkalander. Zur einseitigen Strukturierung der Folienoberfläche kann eine Gummi-Walze eingesetzt werden. Im Walzenspalt des Glättkalanders erfolgt die endgültige Formgebung. Die für die Strukturierung der Folienoberfläche verwendeten Gummi-Walzen werden in US 4 368 240 beschrieben. Die Formfixierung erfolgt letztendlich durch Abkühlung und zwar wechselseitig auf den Glättwalzen und an der Umgebungsluft. Die weiteren Einrichtungen des Plastifizierungssystems dienen dem Transport, dem ev. gewünschten Aufbringen von Schutzfolien und Aufwickeln der extrudierten Folien.

Wie in den erfindungsgemäßen Beispielen überraschend gezeigt wird, werden sehr gute Helligkeiten der Back Light Unit erhalten, wenn entgegen den Aussagen der WO 2004/090587 Folien eingesetzt werden, die einen Glanzgrad von < 20 % und eine Rauigkeit > 3 µm auf der strukturierten Seite und einen Glanzgrad > 50 % auf der glänzenden Seite haben.

Als Kunststoffe für die erfindungsgemäßen Folien kommen alle transparenten Polycarbonate in Frage.

Geeignete Polycarbonate für die Herstellung der erfindungsgemäßen Folien sind alle bekannten Polycarbonate. Dies sind Homopolycarbonate, Copolycarbonate und thermoplastische Polyestercarbonate.

Die geeigneten Polycarbonate haben bevorzugt mittlere Molekulargewichte M̅_{w} von 18.000 bis 40.000, vorzugsweise von 26.000 bis 36.000 und insbesondere von 28.000 bis 35.000, ermittelt durch Messung der relativen Lösungsviskosität in Dichlormethan oder in Mischungen gleicher Gewichtsmengen Phenol/o-Dichlorbenzol geeicht durch Lichtstreuung.

Die Herstellung der Polycarbonate erfolgt vorzugsweise nach dem Phasengrenzflächenverfahren oder dem Schmelze-Umesterungsverfahren und wird im Folgenden beispielhaft an dem Phasengrenzflächenverfahren beschrieben.

Die Herstellung der Polycarbonate erfolgt u.a. nach dem Phasengrenzflächenverfahren. Dieses Verfahren zur Polycarbonatsynthese ist mannigfaltig in der Literatur beschrieben; beispielhaft sei auf H. Schnell, Chemistry and Physics of Polycarbonates, Polymer Reviews, Vol. 9, Interscience Publishers, New York 1964 S. 33 ff., auf Polymer Reviews, Vol. 10, "Condensation Polymers by Interfacial and Solution Methods", Paul W. Morgan, Interscience Publishers, New York 1965, Kap. VIII, S. 325, auf Dres. U. Grigo, K. Kircher und P. R- Müller "Polycarbonate" in Becker/Braun, Kunststoff-Handbuch, Band 3/1, Polycarbonate, Polyacetale, Polyester, Celluloseester, Carl Hanser Verlag München, Wien 1992, S. 118-145 sowie auf EP-A 0 517 044 verwiesen.

Geeignete Diphenole sind z.B. in den US-A -PS 2 999 835, 3 148 172, 2 991 273, 3 271 367, 4 982 014 und 2 999 846, in den deutschen Offenlegungsschriften 1 570 703, 2 063 050, 2 036 052, 2 211 956 und 3 832 396, der franzoesischen Patentschrift 1 561 518, in der Monographie "H. Schnell, Chemistry and Physics of Polycarbonates, Interscience Publishers, New York 1964, S. 28ff; S.102ff", und in "D.G. Legrand, J.T. Bendler, Handbook of Polycarbonate Science and Technology, Marcel Dekker New York 2000, S. 72ff." beschrieben

Die Herstellung von Polycarbonaten ist auch aus Diarylcarbonaten und Diphenolen nach dem bekannten Polycarbonatverfahren in der Schmelze, dem sogenannten Schmelzumesterungsverfahren, möglich, das z.B. in WO-A 01/05866 und WO-A 01/05867 beschrieben ist. Daneben werden Umesterungsverfahren (Acetatverfahren und Phenylesterverfahren) beispielsweise in den US-A 34 94 885, 43 86 186, 46 61 580, 46 80 371 und 46 80 372, in den EP-A 26 120, 26 121, 26 684, 28 030, 39 845, 39 845, 91 602, 97 970, 79 075, 14 68 87, 15 61 03, 23 49 13 und 24 03 01 sowie in den DE-A 14 95 626 und 22 32 977 beschrieben.

Geeignet sind sowohl Homopolycarbonate als auch Copolycarbonate. Zur Herstellung erfindungsgemäßer Copolycarbonate als Komponente A können auch 1 bis 25 Gew.-%, vorzugsweise 2,5 bis 25 Gew.-% (bezogen auf die Gesamtmenge an einzusetzenden Diphenolen), Polydiorganosiloxane mit Hydroxy-aryloxy-Endgruppen eingesetzt werden. Diese sind bekannt (s. beispielsweise aus US-Patent 3 419 634) bzw. nach literaturbekannten Verfahren herstellbar. Die Herstellung Polydiorganosiloxanhaltiger Copolycarbonate wird z. B. in DE-OS 33 34 782 beschrieben.

Ferner sind Polyestercarbonate und Block-Copolyestercarbonate geeignet, besonders wie sie in der WO 2000/26275 beschrieben sind.. Aromatische Dicarbonsäuredihalogenide zur Herstellung von aromatischen Polyestercarbonate sind vorzugsweise die Disäuredichloride der Isopthalsäure, Terepthalsäure, Diphenylether-4,4'-dicarbonsäure und der Naphthalin-2,6-dicarbonsäure.

Die aromatischen Polyestercarbonate können sowohl linear als auch in bekannter Weise verzweigt sein (siehe dazu ebenfalls DE-OS 29 40 024 und DE-OS 30 07 934).

Die Polydiorganosiloxan-Polycarbonat-Blockpolymeren können auch eine Mischung aus Polydiorganosiloxan-Polycarbonat-Blockcopolymeren mit üblichen polysiloxanfreien, thermoplastischen Polycarbonaten sein, wobei der Gesamtgehalt an Polydiorganosiloxanstruktureinheiten in dieser Mischung ca. 2,5 bis 25 Gew.-% beträgt.

Derartige Polydiorganosiloxan-Polycarbonat-Blockcopolymere sind z.B. aus US-PS 3 189 662, US-PS 3 821 325 und US-PS 3 832 419 bekannt.

Bevorzugte Polydiorganosiloxan-Polycarbonat-Blockcopolymere werden hergestellt, indem man alpha, omega-Bishydroxyaryloxyendgruppen-haltige Polydiorganosiloxane zusammen mit anderen Diphenolen, gegebenenfalls unter Mitverwendung von Verzweigern in den üblichen Mengen, z. B. nach dem Zweiphasengrenzflächenverfahren (s. dazu H. Schnell, Chemistry and Physics of Polycarbonates Polymer Rev. Vol. IX, Seite 27 ff, Interscience Publishers New York 1964) umsetzt, wobei jeweils das Verhältnis der bifunktionellen phenolischen Reaktanten so gewählt wird, dass daraus der erfindungsgemässe Gehalt an aromatischen Carbonatstruktureinheiten und Diorganosiloxy-Einheiten resultiert.

Derartige alpha, omega-Bishydroxyaryloxyendgruppen-haltige Polydiorganosiloxane sind z.B. aus US 3 419 634 bekannt.

Bei den erfindungsgemäß einzusetzenden polymeren Teilchen auf Acrylatbasis mit einer Kern-Schale-Morphologie handelt es sich beispielsweise und bevorzugt um solche, wie sie in EP-A 634 445 offenbart werden.

Die polymeren Teilchen haben einen Kern aus einem kautschukartigen Vinylpolymeren. Das kautschukartige Vinylpolymere kann ein Homo- oder Copolymeres von einem beliebigen der Monomeren sein, die wenigstens eine ethylenartig ungesättigte Gruppe besitzen und die eine Additionspolymerisation - wie sie allgemein bekannt ist - unter den Bedingungen der Emulsionspolymerisation in einem wässrigen Medium eingehen. Solche Monomere sind in US 4 226 752, Spalte 3, Zeilen 40 - 62, aufgelistet.

Am meisten bevorzugt enthalten die polymeren Teilchen einen Kern aus kautschukartigem Alkylacrylatpolymeren, wobei die Alkylgruppe 2 bis 8 Kohlenstoffatome aufweist, wahlweise copolymerisiert mit 0 bis 5 % Vernetzer und 0 bis 5 % Pfropfvernetzer, bezogen auf das Gesamtgewicht des Kerns. Das kautschukartige Alkylacrylat ist bevorzugt mit bis zu 50 % von einem oder mehreren copolymerisierbaren Vinylmonomeren copolymerisiert, beispielsweise den zuvor genannten. Geeignete vernetzende und pfropfvernetzende Monomere sind dem Fachmann auf dem Gebiet wohlbekannt, und es sind bevorzugt solche, wie sie in EP-A 0 269 324 beschrieben sind.

Die polymeren Teilchen enthalten eine oder mehrere Mäntel. Dieser eine Mantel oder diese mehreren Mäntel sind bevorzugt aus einem Vinylhomo- oder -copolymeren hergestellt. Geeignete Monomere zur Herstellung des/der Mantel/Mäntel sind im US-Patent No. 4 226 752, Spalte 4, Zeilen 20 - 46, aufgeführt, wobei auf die Angaben hierüber Bezug genommen wird. Ein Mantel oder mehrere Mäntel sind bevorzugt ein Polymeres aus einem Methacrylat, Acrylat, Vinylaren, Vinylcarboxylat, Acrylsäure und/oder Methacrylsäure.

Die polymeren Teilchen sind nützlich, um dem transparenten Kunststoffen, bevorzugt Polycarbonat, Lichtstreueigenschaften zu erteilen. Der Brechungsindex n von Kern und des Mantels/der Mäntel der polymeren Teilchen liegt bevorzugt innerhalb von +/-0,25 Einheiten, mehr bevorzugt innerhalb +/-0,18 Einheiten, am meisten bevorzugt innerhalb +/-0,12 Einheiten des Brechungsindexes des Polycarbonats. Der Brechungsindex n des Kerns und des Mantels/der Mäntel liegt bevorzugt nicht näher als +/-0,003 Einheiten, mehr bevorzugt nicht näher als +/-0,01 Einheiten, am meisten bevorzugt nicht näher als +/-0,05 Einheiten bei dem Brechungsindex des Polycarbonats. Der Brechungsindex wird entsprechend der Norm ASTM D 542-50 und/oder DIN 53 400 gemessen.

Die polymeren Teilchen haben im Allgemeinen einen Durchschnittsteilchendurchmesser (mittleren Teilchendurchmesser oder -größe) von wenigstens 0,5 Mikrometer, bevorzugt von wenigstens 1 Mikrometer bis höchstens 100 Mikrometer, mehr bevorzugt von 2 bis 50 Mikrometer, am meisten bevorzugt von 2 bis 15 Mikrometer. Unter "Durchschnittsteilchendurchmesser" (mittlerer Teilchendurchmesser) ist der Zahlendurchschnitt zu verstehen. Bevorzugt haben wenigstens 90 %, am meisten bevorzugt wenigstens 95 % der polymeren Teilchen einen Durchmesser von mehr als 1 Mikrometer und kleiner als 100 µm. Die polymeren Teilchen sind ein freifließendes Pulver, bevorzugt in kompaktierter Form.

Die polymeren Teilchen können in bekannter Weise hergestellt werden. Im Allgemeinen wird wenigstens eine Monomerenkomponente des Kernpolymeren der Emulsionspolymerisation unter Bildung von Emulsionspolymerteilchen unterworfen. Die Emulsionspolymerteilchen werden mit derselben oder einer oder mehreren anderen Monomerenkomponenten des Kernpolymeren gequollen, und das/die Monomere werden innerhalb der Emulsionspolymerteilchen polymerisiert. Die Stufen des Quellens und Polymerisierens können wiederholt werden, bis die Teilchen auf die gewünschte Kerngröße angewachsen sind. Die Kernpolymerteilchen werden in einer zweiten wässrigen Monomerenemulsion suspendiert, und es wird ein Polymermantel aus dem/den Monomeren auf die Polymerteilchen in der zweiten Emulsion polymerisiert. Ein Mantel oder mehrere Mäntel können auf dem Kernpolymeren polymerisiert werden. Die Herstellung von Kern/Mantelpolymerteilchen ist in EP-A 0 269 324 und in den US-Patenten 3,793,402 und 3,808,180 beschrieben.

Ferner zeigt sich überraschenderweise, dass durch die Verwendung einer kleinen Menge optischen Aufhellers im Polycarbonat die Brightnesswerte der Folie weiter erhöht werden können.

Eine Ausführungsform der Erfindung stellt daher eine erfindungsgemäße Folie dar, die zusätzlich 0,001 bis 0,2 Gewichts-%, bevorzugt etwa 1000 ppm eines optischen Aufhellers, bevorzugt aus der Klasse Bis-Benzoxazole, Phenylcoumarine oder Bis-Styrylbiphenyle enthalten kann.

Ein besonders bevorzugter optischer Aufheller ist Uvitex OB, der Fa. Ciba Spezialitätenchemie.

Die erfindungsgemäßen Folien werden vorzugsweise durch Extrusion hergestellt.

Zur Extrusion wird ein Polycarbonat-Granulat dem Extruder zugeführt und im Plastifizierungssystem des Extruders aufgeschmolzen. Die Kunststoffschmelze wird durch eine Breitschlitzdüse gedrückt und dabei verformt, im Walzenspalt eines Glättkalanders in die gewünschte endgültige Form gebracht und durch wechselseitige Kühlung auf Glättwalzen und der Umgebungsluft formfixiert. Die zur Extrusion verwendeten Polycarbonate mit hoher Schmelzeviskosität werden üblicherweise bei Schmelzetemperaturen von 260 bis 320°C verarbeitet, entsprechend werden die Zylindertemperaturen des Plastifizierzylinders sowie Düsentemperaturen eingestellt.

Durch Einsatz von einem oder mehrerer Seitenextruder und geeigneten Schmelzeadaptern vor der Breitschlitzdüse lassen sich Polycarbonatschmelzen verschiedener Zusammensetzung übereinander legen und somit mehrschichtige Folien erzeugen (siehe beispielsweise EP-A 0 110 221 und EP-A 0 110 238).

Sowohl die Basisschicht als auch die gegebenenfalls vorhandene(n) Coextrusionsschicht(en) der erfindungsgemäßen Folien können zusätzlich Additive, wie beispielsweise UV-Absorber sowie andere übliche Verarbeitungshilfsmittel, insbesondere Entformungsmittel und Fließmittel sowie die für Polycarbonate üblichen Stabilisatoren insbesondere Thermostabilisatoren sowie Antistatika und optische Aufheller enthalten. In jeder Schicht können dabei unterschiedliche Additive bzw. Konzentrationen von Additiven vorhanden sein. Vorzugsweise enthält die Coextrusionsschicht(en) die Antistatika, UV-Absorber und Entformungsmittel.

In einer bevorzugten Ausführungsform enthält die Zusammensetzung der Folie zusätzlich 0,01 bis 0,5 Gew.-% eines UV-Absorbers der Klassen Benzotriazol-Derivate, Dimere Benzotriazol-Derivate, Triazin-Derivate, Dimere Triazin-Derivate, Diarylcyanoacrylate.

Geeignete Stabilisatoren sind beispielsweise Phosphine, Phosphite oder Si enthaltende Stabilisatoren und weitere in EP-A 0 500 496 beschriebene Verbindungen. Beispielhaft seien Triphenylphosphite, Diphenylalkylphosphite, Phenyldialkylphosphite, Tris-(nonylphenyl)phosphit, Tetrakis-(2,4-di-tert.-butylphenyl)-4,4'-biphenylen-diphosphonit, Bis(2,4-dicumylphenyl)petaerythritoldiphosphit und Triarylphosphit genannt. Besonders bevorzugt sind Triphenylphosphin und Tris-(2,4-di-tert.-butylphenyl)phosphit.

Geeignete Entformungsmittel sind beispielsweise die Ester oder Teilester von ein- bis sechswertigen Alkoholen, insbesondere des Glycerins, des Pentaerythrits oder von Guerbetalkoholen.

Einwertige Alkohole sind beispielsweise Stearylalkohol, Palmitylalkohol und Guerbetalkohole, ein zweiwertiger Alkohol ist beispielsweise Glycol, ein dreiwertiger Alkohol ist beispielsweise Glycerin, vierwertige Alkohole sind beispielsweise Pentaerythrit und Mesoerythrit, fünfwertige Alkohole sind beispielsweise Arabit, Ribit und Xylit, sechswertige Alkohole sind beispielsweise Mannit, Glucit (Sorbit) und Dulcit.

Die Ester sind bevorzugt die Monoester, Diester, Triester, Tetraester, Pentaester und Hexaester oder deren Mischungen, insbesondere statistische Mischungen, aus gesättigten, aliphatischen C₁₀ bis C₃₆-Monocarbonsäuren und gegebenenfalls Hydroxy-Monocarbonsäuren, vorzugsweise mit gesättigten, aliphatischen C₁₄ bis C₃₂-Monocarbonsäuren und gegebenenfalls Hydroxy-Monocarbonsäuren.

Die kommerziell erhältlichen Fettsäureester, insbesondere des Pentaerythrits und des Glycerins, können herstellungsbedingt < 60 % unterschiedlicher Teilester enthalten.

Gesättigte, aliphatische Monocarbonsäuren mit 10 bis 36 C-Atomen sind beispielsweise Caprinsäure, Laurinsäure, Myristinsäure, Palmitinsäure, Stearinsäure, Hydroxystearinsäure, Arachinsäure, Behensäure, Lignocerinsäure, Cerotinsäure und Montansäuren.

Beispiele für geeignete Antistatika sind kationaktive Verbindungen, beispielsweise quartäre Ammonium-, Phosphonium- oder Sulfoniumsalze, anionaktive Verbindungen, beispielsweise Alkylsulfonate, Alkylsulfate, Alkylphosphate, Carboxylate in Form von Alkali- oder Erdalkalimetallsalzen, nichtionogene Verbindungen, beispielsweise Polyethylenglykolester, Polyethylenglykolether, Fettsäureester, ethoxylierte Fettamine. Bevorzugte Antistatika sind nichtionogene Verbindungen.

Die Erfindung soll durch die folgenden Beispiele näher erläutert werden.

### Beispiele

### Herstellung eines Master-Batches durch Compoundierung:

Die Herstellung des Master-Batches erfolgt mit herkömmlichen Zweischnecken-Compoundierextrudern (z.B. ZSK 32) bei für Polycarbonat üblichen Verarbeitungstemperaturen von 250 bis 330°C.

Es wurde ein Master-Batch mit folgender Zusammensetzung hergestellt:
- 80 Gew.-% Makrolon^{®} 3108 550115 (Polycarbonat (PC) der Fa. Bayer MaterialScience AG)
- 20 Gew.-% Kern-Schale-Teilchen mit einem Butadien/Styrol-Kern und einer Methylmethacrylat-Schale (Paraloid^{®} EXL 5137 der Fa. Rohm & Haas) mit einer Teilchengröße von 2 bis 15 µm und einer mittleren Teilchengröße von 8 µm.

Die verwendete Anlage für die Herstellung der Folien besteht aus
- einem Hauptextruder mit einer Schnecke von 105 mm Durchmesser (D) und einer Länge von 41xD; die Schnecke weist eine Entgasungszone auf;
- einem Coextruder zum Aufbringen einer Deckschicht mit einer Schnecke der Länge 25xD und einem Durchmesser (D) von 35 mm;
- einem Umlenkkopf;
- einer Coextrusions-Breitschlitzdüse mit 1500 mm Breite;
- einem Dreiwalzen-Glättkalander mit horizontaler Walzenanordnung, wobei die dritte Walze um +/- 45° gegenüber der Horizontalen schwenkbar ist;
- einer Rollenbahn;
- einer Einrichtung zum beidseitigen Aufbringen von Schutzfolie;
- einer Abzugseinrichtung;
- Aufwickelstation.

Das jeweilige Granulat des Lichtstreuenden Materials wurde dem Fülltrichter des Hauptextruders zugeführt. Das Polycarbonat Makrolon^{®} 3108 550 115 wurde dem Fülltrichter des Coextruders zugeführt. Im jeweiligen Plastifiziersystem Zylinder/Schnecke der Extruder erfolgte das Aufschmelzen und Fördern des jeweiligen Materials. Beide Materialschmelzen wurden vor der Coextrusionsdüse im Umlenkkopf zusammengeführt und anschließend dem Glättkalander zugeführt, dessen Walzen die in der Tabelle 1 genannte Temperatur aufwiesen. Auf dem Glättkalander (bestehend aus drei Walzen) erfolgte die endgültige Formgebung und Abkühlung der Folie. Zur einseitigen Strukturierung der Folienoberfläche wurde dabei eine Gummi-Walze eingesetzt. Die für die Strukturierung der Folienoberfläche verwendete Gummi-Walze ist in US- 4 368 240 der Fa. Nauta Roll Corporation offenbart. Anschließend wurde die Folie durch einen Abzug transportiert. Danach kann eine Schutzfolie aus PE beidseitig aufgebracht werden und eine Aufwicklung der Folie erfolgen.

**Tabelle 1**

| Verfahrensparameter | |
|---|---|
| Temperatur des Hauptextruders | etwa 275°C |
| Temperatur des Coextruders | etwa 260°C |
| Temperatur des Umlenkkopfes | etwa 285°C |
| Temperatur der Düse | etwa 300°C |
| Drehzahl des Hauptextruders | 45 min⁻¹ |
| Drehzahl des Coextruders | 12 min⁻¹ |
| Temperatur der Gummiwalze 1 | 24°C |
| Temperatur der Walze 2 | 72°C |
| Temperatur der Walze 3 | 131°C |
| Abzugsgeschwindigkeit | 21,5 m/min |

### Bespiel 1

Es wurde folgende Lichtstreuende Zusammensetzung dem Hauptextruder zugeführt:
- 96,0 Gew.-% Makrolon^{®} 3108 550115 (PC der Fa. Bayer MaterialScience AG)
- 4,0 Gew.-% Masterbatch (wie oben beschrieben)

Es wurde folgendes Polycarbonat dem Coextruder zugeführt:
- Makrolon^{®} 3108 550115 der Fa. Bayer MaterialScience AG

Hieraus wurde eine Coextrusionsfolie mit einer transparenten Polycarbonat-Schicht mit glatter Oberfläche und einer Lichtstreuenden Schicht mit einer strukturierten Oberfläche und einer Gesamtdicke von 125 µm erhalten. Die Lichtstreuende Schicht hat eine Dicke von 100 µm und die PC-Schicht eine Dicke von 25 µm.
Gummiwalze 1: ca. 30°C
relatives Spaltenmaß zwischen Walze 1 und 2: 0,6

### Beispiel 2

Es wurde folgende Lichtstreuende Zusammensetzung dem Hauptextruder zugeführt:
- 96 Gew.-% Polycarbonat Makrolon^{®} 3108 550115 der Fa. Bayer MaterialScience AG
- 4 Gew.-% Masterbatch (wie oben beschrieben).

Es wurde folgendes Polycarbonat dem Coextruder zugeführt:
- Makrolon^{®} 3108 550115 der Fa. Bayer MaterialScience AG mit einem Anteil von 100,0 Gew.-%

Hieraus wurde eine Coextrusionsfolie mit einer transparenten Polycarbonat-Schicht mit glatter Oberfläche und einer Lichtstreuenden Schicht mit einer strukturierten Oberfläche und einer Dicke von 150 µm erhalten. Die Lichtstreuende Schicht war 100 µm und die PC-Schicht 50 µm dick.
Gummiwalze 1: ca. 30°C
relatives Spaltenmaß zwischen Walze 1 und 2: 0,6

### Beispiel 3

Es wurde folgende Lichtstreuende Zusammensetzung dem Hauptextruder zugeführt:
- 94 Gew.-% Makrolon^{®} 3108 550115 der Fa. Bayer MaterialScience AG
- 6 Gew.-% (wie oben beschrieben)

Es wurde folgendes Polycarbonat dem Coextruder zugeführt:
- Makrolon^{®} 3108 550115 der Fa. Bayer MaterialScience AG

Hieraus wurde eine Coextrusionsfolie mit einer transparenten Polycarbonat-Schicht mit glatter Oberfläche und einer Lichtstreuenden Schicht mit strukturierter Oberfläche und einer Gesamtdicke von 125 µm extrudiert. Die Lichtstreuende Schicht war 100 µm dick und die PC-Schicht 25 µm dick.
Gummi-Walze 1: ca. 30°C
relatives Spaltmass zwischen Walze 1 und 2: 0,6

### Beispiel 4

Es wurde folgende Lichtstreuende Zusammensetzung dem Hauptextruder zugeführt:
- 94 Gew.-% Makrolon^{®} 3108 550115 der Fa. Bayer MaterialScience AG
- 6 Gew.-% (wie oben beschrieben)

Es wurde folgendes Polycarbonat dem Coextruder zugeführt:
- Makrolon^{®} 3108 550115 der Fa. Bayer MaterialScience AG

Hieraus wurde eine Coextrusionsfolie mit einer transparenten Polycarbonat-Schicht mit glatter Oberfläche und einer Lichtstreuenden Schicht mit strukturierter Oberfläche und einer Gesamtdicke von 150 µm extrudiert. Die Lichtstreuende Schicht hatte eine Dicke von 100 µm und die PC-Schicht von 50 µm.
Gummi-Walze 1: ca. 30°C
relatives Spaltmass zwischen Walze 1 und 2: 0,6

### Beispiel 5

Es wurde folgende Lichtstreuende Zusammensetzung dem Hauptextruder zugeführt:
- 94 Gew.-% Makrolon^{®} 3108 550115 der Fa. Bayer MaterialScience AG
- 6 Gew.-% (wie oben beschrieben)

Es wurde folgendes Polycarbonat dem Coextruder zugeführt:
- Makrolon^{®} 3108 550115 der Fa. Bayer MaterialScience AG

Hieraus wurde eine Coextrusionsfolie mit einer transparenten Polycarbonat-Schicht mit glatter Oberfläche und einer Lichtstreuenden Schicht mit strukturierter Oberfläche und einer Gesamtdicke von 125 µm extrudiert. Die Lichtstreuende Schicht hatte eine Dicke von 100 µm.
Gummi-Walze 1: ca. 30°C
relatives Spaltmass zwischen Walze 1 und 2: 0,6

### Beispiel 6

Es wurde folgende Lichtstreuende Zusammensetzung dem Hauptextruder zugeführt:
- 94 Gew.-% Makrolon^{®} 3108 550115 der Fa. Bayer MaterialScience AG
- 6 Gew.-% (wie oben beschrieben)

Es wurde folgendes Polycarbonat dem Coextruder zugeführt:
- Makrolon^{®} 3108 550115 der Fa. Bayer MaterialScience AG

Hieraus wurde eine Coextrusionsfolie mit einer transparenten Polycarbonat-Schicht mit glatter Oberfläche und einer Lichtstreuenden Schicht mit strukturierter Oberfläche und einer Gesamtdicke von 125 µm extrudiert. Die Lichtstreuende Schicht hatte eine Dicke von 100 µm.
Gummi-Walze 1: ca. 30°C
relatives Spaltmass zwischen Walze 1 und 2: 0,6

### Vergleichsbeispiel 7 (nicht erfindungsgemäß)

Es wurde folgende Lichtstreuende Zusammensetzung dem Hauptextruder zugeführt:
- 94 Gew.-% Makrolon^{®} 3108 550115 der Fa. Bayer MaterialScience AG
- 6 Gew.-% (wie oben beschrieben)

Es wurde folgendes Polycarbonat dem Coextruder zugeführt:
- Makrolon^{®} 3108 550115 der Fa. Bayer MaterialScience AG

Hieraus wurde eine Coextrusionsfolie mit einer transparenten Polycarbonat-Schicht mit glatter Oberfläche und einer Lichtstreuenden Schicht mit strukturierter Oberfläche und einer Gesamtdicke von 125 µm extrudiert. Die Lichtstreuende Schicht hatte eine Dicke von 100 µm.
Gummi-Walze 1: ca. 30°C
relatives Spaltmass zwischen Walze 1 und 2: 0,925

### Vergleichsbeispiel 8 (nicht erfindungsgemäß)

Es wurde folgende Lichtstreuende Zusammensetzung dem Hauptextruder zugeführt:
- 94 Gew.-% Makrolon^{®} 3108 550115 der Fa. Bayer MaterialScience AG
- 6 Gew.-% (wie oben beschrieben)

Es wurde folgendes Polycarbonat dem Coextruder zugeführt:
- Makrolon^{®} 3108 550115 der Fa. Bayer MaterialScience AG

Hieraus wurde eine Coextrusionsfolie mit einer transparenten Polycarbonat-Schicht mit glatter Oberfläche und einer Lichtstreuenden Schicht mit strukturierter Oberfläche und einer Gesamtdicke von 125 µm extrudiert. Die Dicke der Lichtstreuenden Schicht betrug 100 µm.
Gummi-Walze 1: ca. 6,5°C
relatives Spaltmass zwischen Walze 1 und 2: 0,9

### Vergleichsbeispiel 9 (nicht erfindungsgemäß)

Es wurde folgende Lichtstreuende Zusammensetzung dem Hauptextruder zugeführt:
- 94 Gew.-% Makrolon^{®} 3108 550115 der Fa. Bayer MaterialScience AG
- 6 Gew.-% (wie oben beschrieben)

Es wurde folgendes Polycarbonat dem Coextruder zugeführt:
- Makrolon^{®} 3108 550115 der Fa. Bayer MaterialScience AG

Hieraus wurde eine Coextrusionsfolie mit einer transparenten Polycarbonat-Schicht mit glatter Oberfläche und einer Lichtstreuenden Schicht mit strukturierter Oberfläche und einer Gesamtdicke von 125 µm extrudiert. Die Dicke der Lichtstreuenden Schicht betrug 100 µm.
Gummi-Walze 1: ca. 6,5°C
relatives Spaltmass zwischen Walze 1 und 2: 0,95

### Durchführung der optischen Messungen

Die in den Beispielen 1 bis 9 hergestellten Folien wurden auf ihre optischen Eigenschaften untersucht:
Der Glanz wurde gemäß der Norm EN ISO 2813 (Winkel 60°) bestimmt.
Die Rauigkeit wurde gemäß der Norm ISO 4288 bestimmt.

Zur Bestimmung der Lichttransmission (Ty (C2°)) wurde ein Ultra Scan XE der Fa. Hunter Associates Laboratory, Inc. verwendet. Für die Lichtreflexion (Ry (C2°)) wurde ein Lambda 900 der Fa. Perkin Elmer Optoelectronics verwendet. Für die Haze-Bestimmung (nach ASTM D 1003) wurde ein Hazegard Plus der Fa. Byk-Gardner verwendet. Der Halbwertswinkel HW als Maß für die Stärke der Lichtstreuenden Wirkung wurde mit einem Goniophotometer nach DIN 58161 bestimmt. Die Leuchtdichtemessungen (Brightness-Messungen) wurden an einer Backlight-Unit (BLU) der Fa. DS LCD, (LTA320W2-L02, 32" LCD TV Panel) mit Hilfe eines Luminance Meter LS100 der Fa. Minolta durchgeführt.

Zur Messung der Brightness wurde wie folgt vorgegangen: Aus den Folien der Beispiele 1 bis 9 wurden passende Stücke ausgeschnitten und in eine Backlight-Unit (BLU) der Fa. DS LCD, (LTA320W2-L02, 32" LCD TV Panel) eingebaut. Dazu wurde die Folie, die direkt auf der Diffuser-Platte der Backlight-Unit aufliegt, gegen die Folien aus den Beispielen ausgetauscht. Die Folien aus den Beispielen wurden so angeordnet, dass die glatte Seite auf die Diffuser-Platte gelegt wurde. Die beiden anderen Folien, die sich in der Backlight-Unit auf der ausgetauschten Folie befanden, wurden nach dem Austausch wieder in der Original-Reihenfolge und Anordnung auf die Folien aus den Beispielen aufgelegt. Die Brightness der so geänderten Back Light Unit wurde gemessen.

Zusätzlich wurde die Brightness der Original-Backlight-Unit gemessen (Beispiel 10).

Dabei wurde die Brightness jeweils an insgesamt 9 verschiedenen Stellen der Backlight-Unit gemessen (mit Hilfe eines Minolta Luminance Meter LS100) und der Mittelwert daraus berechnet.

Aus den Beispielen lässt sich erkennen, dass die Brightness der Unit mit den erfindungsgemäßen Folien erheblich größer ist als die Brightness der Unit mit den Vergleichsfolien und der Original-Unit.

**Tabelle 2 Messergebnisse**

| | Beispiel 1 | Beispiel 2 | Beispiel 3 | Beispiel 4 | Beispiel 5 | Beispiel 6 | Beispiel 7 | Beispiel 8 | Beispiel 9 | Beispiel 10 (Original-Backlight-Unit) |
|---|---|---|---|---|---|---|---|---|---|---|
| Glanzgrad | 104 | 104 | 104 | 103,9 | 103 | 103,9 | 103,5 | 103,8 | 103,9 | - |
| (glatte Seite) | | | | | | | | | | |
| Glanzgrad | 2,3 | 2,1 | 2,2 | 2,2 | 5,5 | 1,4 | 43,8 | 28,8 | 77 | - |
| (strukturierte Seite) | | | | | | | | | | |
| Rauigkeit R3Z | 6,2 | 6,0 | 6,0 | 6,4 | 6,67 | 9,14 | 1,95 | 3,92 | 1,44 | - |
| [µm] | | | | | | | | | | |
| Transmission [%] | 85,21 | 84,45 | 85,21 | 84,85 | 85,31 | 85,54 | 85,1 | 85,48 | 84,78 | 67,4 |
| *{(C2°) Hunter Ultra Scan}* | | | | | | | | | | |
| Reflexion [%] | 10,44 | 10,38 | 10,68 | 10,60 | 10,55 | 10,5 | 10,35 | 10,41 | 10,54 | 8,89 |
| *{(C2°) Hunter Ultra Scan}* | | | | | | | | | | |
| Haze [%] | 95,1 | 95,6 | 95,6 | 95,8 | 93,2 | 92,0 | 95,3 | 95,0 | 95,1 | - |
| Halbwertswinkel [°] | 8,4 | 9,2 | 9,2 | 8,5 | 8,2 | 6,5 | 7,2 | 9,2 | 8,4 | 4,0 |
| Brightness [cd/m²] | 7414 | 7404 | 7414 | 7402 | 7448 | 7507 | 7259 | 7307 | 7253 | 7380 |

## Patentansprüche

1. Kunststofffolien, die aus mindestens einer Schicht bestehen, **dadurch gekennzeichnet, dass** wenigstens eine Schicht 80 bis 99,99 Gew.-% eines transparenten Polycarbonats und 0,01 bis 20 Gew.-% polymerer Teilchen auf Acrylat-Basis mit einer Kern-Schale-Morphologie und einem vom Matrixmaterial unterschiedlichen Brechungsindex und mit einem Zahlenmittel der mittleren Teilchengröße zwischen 1 und 100 µm enthält, und die Folie eine strukturierte Seite und eine glänzende Seite aufweist, wobei die Oberfläche der strukturierten Seite einen Glanzgrad gemessen gemäß EN ISO 2813 bei einem Winkel von 60° von < 20 % und > 0,5 % und eine Rauigkeit R_{3Z} gemessen gemäß ISO 4288 von > 4 µm und < 20 µm hat und die Oberfläche der glänzenden Seite einen Glanzgrad gemessen gemäß EN ISO 2813 bei einem Winkel von 60° von > 50 % aufweist.

2. Folien gemäß Anspruch 1, wobei die Dicke der Folien 0,03 bis 1 mm beträgt.

3. Folien gemäß einem oder mehreren der Ansprüche 1 oder 2, **dadurch gekennzeichnet, dass** die Folien coextrudierte Folien sind.

4. Verwendung der Folien gemäß einem der Ansprüche 1 bis 3 als Diffusorfolien in Flachbildschirmen.

5. Backlight-Unit (BLU), **dadurch gekennzeichnet dass** sie mindestens eine Kunststofffolie nach Anspruch 1 aufweist.

6. Backlight-Unit (BLU) nach Anspruch 5, **dadurch gekennzeichnet dass** die Kunststofffolie als Diffuserfolie dient.

7. Flachbildschirm, **dadurch gekennzeichnet, dass** er mindestens eine Kunststofffolie nach Anspruch 1 oder eine Backlight-unit nach Anspruch 6 aufweist.

## Claims

1. Plastics films which are composed of at least one layer, **characterized in that** at least one layer comprises from 80 to 99.99% by weight of a transparent polycarbonate and from 0.01 to 20% by weight of acrylate-based polymeric particles with core-shell morphology and with a refractive index different from that of the matrix material and with a number-average particle size from 1 to 100 µm, and that the film has a structured side and a glossy side, where the gloss level of the surface of the structured side is from < 20% to > 0.5%, measured in accordance with EN ISO 2813 at an angle of 60° and the roughness R_{3Z} of the structured side is from > 4 µm to < 20 µm, measured in accordance with ISO 4288, and the gloss level of the surface of the glossy side is from > 50%, measured in accordance with EN ISO 2813 at an angle of 60°.

2. Films according to Claim 1, where the thickness of the films is from 0.03 to 1 mm.

3. Films according to Claim 1 and/or 2, **characterized in that** the films are coextruded films.

4. Use of the films according to any of Claims 1 to 3 as diffuser films in flat screens.

5. Backlight unit (BLU), **characterized in that** it comprises at least one plastics film according to Claim 1.

6. Backlight unit (BLU) according to Claim 5, **characterized in that** the plastics film serves as diffuser film.

7. Flat screen, **characterized in that** it comprises at least one plastics film according to Claim 1 or one backlight unit according to Claim 6.

## Revendications

1. Films plastiques constitués d'au moins une couche, **caractérisés en ce qu'**au moins une couche contient 80 à 99,99 % en poids d'un polycarbonate transparent et 0,01 à 20 % en poids de particules polymères à base d'acrylate ayant une morphologie enveloppe-noyau et présentant un indice de réfraction différent du matériau de matrice et une moyenne en nombre de la taille de particule moyenne comprise entre 1 et 100 µm, et le film comprend un côté structuré et un côté brillant, la surface du côté structuré présentant un degré de brillance mesuré selon EN ISO 2813 à un angle de 60° < 20 % et > 0,5 % et une rugosité R_{3Z} mesurée selon ISO 4288 > 4 µm et < 20 µm, et la surface du côté brillant présentant un degré de brillance mesuré selon EN ISO 2813 à un angle de 60° > 50 %.

2. Film selon la revendication 1, dans lequel l'épaisseur des films est de 0,03 à 1 mm.

3. Film selon une ou plusieurs des revendications 1 ou 2, **caractérisé en ce que** les films sont des films coextrudés.

4. Utilisation des films selon l'une quelconque des revendications 1 à 3 en tant que films diffuseurs dans des écrans plats.

5. Unité de rétro-éclairage (BLU), **caractérisée en ce qu'**elle comprend au moins un film plastique selon la revendication 1.

6. Unité de rétro-éclairage (BLU) selon la revendication 5, **caractérisée en ce que** le film plastique sert de film diffuseur.

7. Écran plat, **caractérisé en ce qu'**il comprend au moins un film plastique selon la revendication 1 ou une unité de rétro-éclairage selon la revendication 6.
